Europäisches Patentamt

European Patent Office

Office européen des brevets

(19)

(11) EP 0 790 539 B1

# (12) FASCICULE DE BREVET EUROPEEN

(45) Date de publication et mention
de la délivrance du brevet:
**01.04.1998 Bulletin 1998/14**

(51) Int Cl.⁶: **G04C 3/14**, H02P 8/16

(21) Numéro de dépôt: **96810084.2**

(22) Date de dépôt: **13.02.1996**

(54) **Procédé et dispositif d'alimentation d'un moteur pas à pas monophasé**

Verfahren und Vorrichtung zum Steuern eines einphasigen Schrittmotors

Method and device for controlling a monophased stepping motor

(84) Etats contractants désignés:
**AT CH DE ES FR GB IE IT LI NL PT**

(43) Date de publication de la demande:
**20.08.1997 Bulletin 1997/34**

(73) Titulaire: **DETRA SA**
**CH-2504 Bienne (CH)**

(72) Inventeurs:
• **Tu, Mai X.**
**CH-1024 Ecublens (CH)**
• **Schwab, Michel**
**CH 2502 Bienne (CH)**

(74) Mandataire: **BOVARD AG - Patentanwälte**
**Optingenstrasse 16**
**3000 Bern 25 (CH)**

(56) Documents cités:
**EP-A- 0 097 350**     **EP-A- 0 345 224**
**EP-A- 0 443 294**     **EP-A- 0 672 975**

## Description

La présente invention a pour objet un procédé d'alimentation d'un moteur pas à pas pour pièce d'horlogerie ainsi qu'un dispositif pour sa mise en oeuvre.

Un moteur pas à pas utilisé dans les pièces d'horlogerie fonctionne généralement avec une charge extrêmement faible, sauf dans certains cas particuliers comme par exemple lors d'un choc ou lors du passage du calendrier. De ce fait, il est intéressant, dans le but d'économiser l'énergie fournie par la pile, de l'alimenter avec une impulsion adaptée à la charge du moteur.

Plusieurs types d'alimentations adaptatives ont déjà été proposés comme par exemple celui décrit dans le brevet EP-B-0.021.320.

Ces alimentations présentent l'inconvénient d'une mise en oeuvre assez complexe, ce qui renchérit le circuit.

Dans le brevet EP-B-0 345 224, les auteurs proposent un procédé d'alimentation d'un moteur pas à pas avec une simplicité de mise en oeuvre du circuit logique de commande; cependant, ce procédé présente deux inconvénients majeurs, à savoir:

- Pour que le procédé fonctionne correctement, il faut que le courant de référence $I_{réf}$ soit assez précis dans une gamme de tension et de température assez large. Si cette précision peut être atteinte techniquement, elle implique néanmoins un renchérissement du circuit.

- Si le niveau du courant de référence est fixé assez élevé, le gain en consommation d'énergie est faible; par contre, si le niveau du courant de référence est faible, le couple développé par le moteur est limité, ce qui peut entraîner des pertes de pas lors de chocs importants.

Le but de la présente invention est de proposer des solutions permettant de remédier aux inconvénients précités tout en gardant les mêmes avantages de simplicité du procédé décrit dans le brevet EP-B-0.345.224.

Ce but est obtenu par un procédé d'alimentation d'un moteur pas à pas répondant aux caractéristiques des revendications 1 à 9, par un dispositif d'alimentation d'un moteur pas à pas conforme à la revendication 10, une application dudit dispositif à une pièce d'horlogerie étant mentionné à la revendication 11.

L'invention sera mieux comprise à la lecture de la description qui suit, en se référant aux dessins annexés, dans lesquels:

- les figures 1a, 1b, 1c et 1d représentent respectivement en fonction du temps, le courant, la tension, la vitesse angulaire et l'angle de rotation du rotor d'un moteur pas à pas alimenté selon le procédé de la présente invention, le moteur n'étant pas chargé.

- Les figures 2a et 2b représentent des agrandissements des figures 1a et 1b.

- Les figures 3a, 3b, 3c et 3d représentent en fonction du temps, le courant, la tension, la vitesse angulaire et l'angle de rotation du moteur dans les mêmes conditions d'alimentation que celles de la figure 1a, 1b, 1c, 1d, le moteur étant chargé par un couple mécanique.

- Les figures 4a et 4b représentent des agrandissements des figures 3a et 3b.

- Les figures 5a et 5b représentent le courant et la tension du moteur en charge avec une augmentation du niveau du courant de référence.

- Les figures 6a et 6b représentent le courant et la tension du moteur en charge avec une augmentation du rapport cyclique de l'impulsion $T_1$.

La demande EP-A-0 097 350 décrit un procédé d'alimentation d'un moteur pas-à-pas dans lequel l'alimentation de la bobine se fait durant une première période par des impulsions hachées dont le rapport cyclique est constant. Par la suite, le moteur est alimenté par un courant ne variant que peu entre deux limites fixes. Ces deux caractéristiques ne permettent pas une économie d'énergie aussi importante que celle obtenue par le procédé selon l'invention.

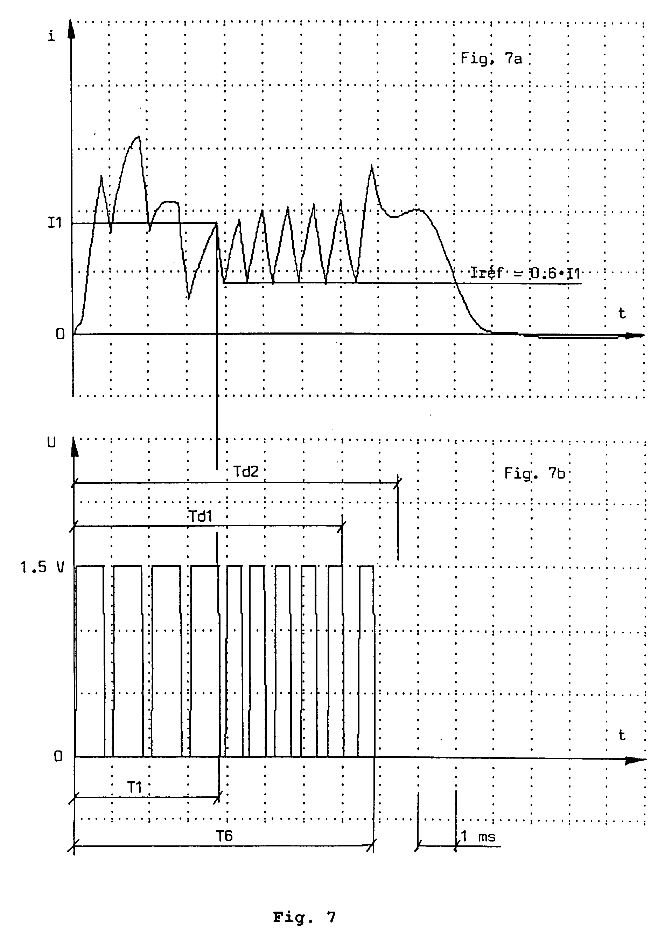

- Les figures 7a et 7b représentent le courant et la tension du moteur en charge avec une modification simultanée du courant de référence et du rapport cyclique de l'impulsion $T_1$.

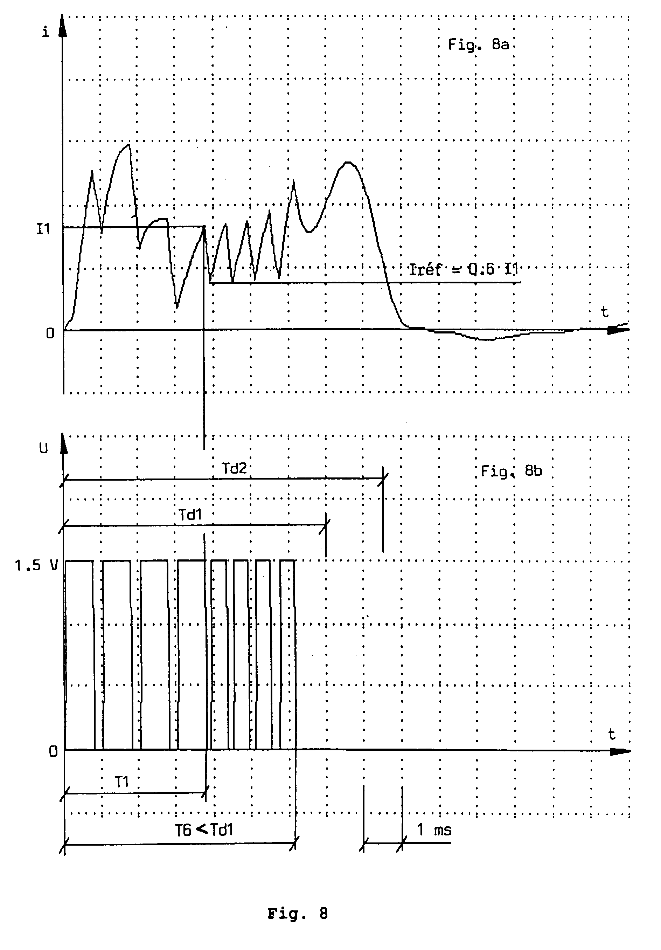

- Les figures 8a et 8b représentent le courant et la tension du moteur dans les mêmes conditions d'alimentation que celles des figures 7a et 7b, le moteur tournant à vide.

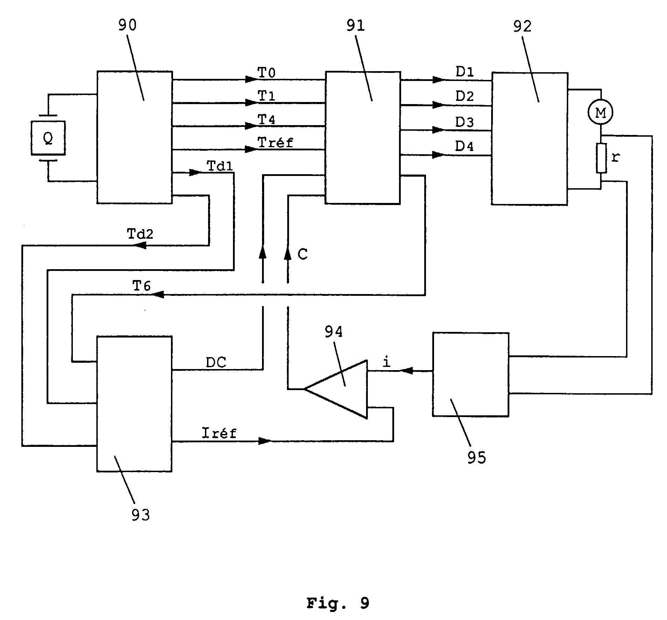

- La figure 9 représente le schéma-bloc d'un exemple de réalisation d'un dispositif pour la mise en oeuvre du procédé d'alimentation selon l'invention.

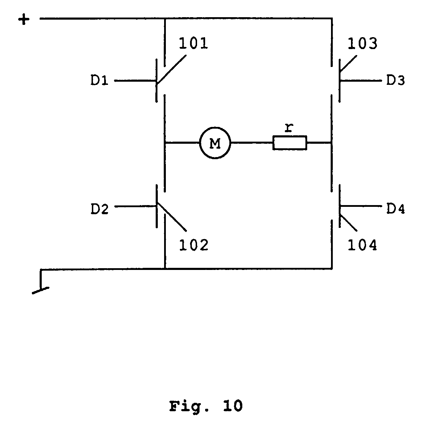

- La figure 10 représente le détail du bloc 92 de la figure 9.

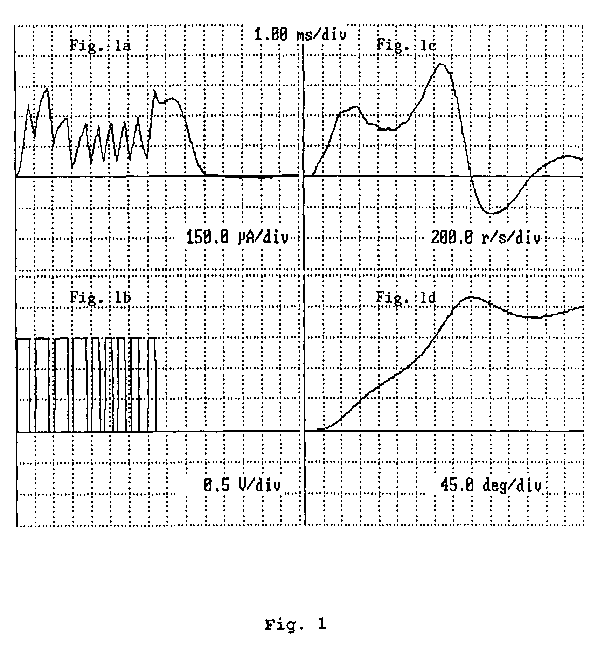

Les figures 1a, 1b, 1c et 1d représentent respectivement en fonction du temps, le courant, la tension, la vitesse angulaire et l'angle de rotation du rotor d'un moteur pas à pas monophasé alimenté selon le procédé de la présente invention, le moteur tournant à vide, c'est-à-dire sans couple mécanique. Dans ce cas, la vitesse angulaire du moteur est élevée (proche de 800 rad/s) et le moteur fait son pas de 0 à 180 degrés après environ 8 ms.

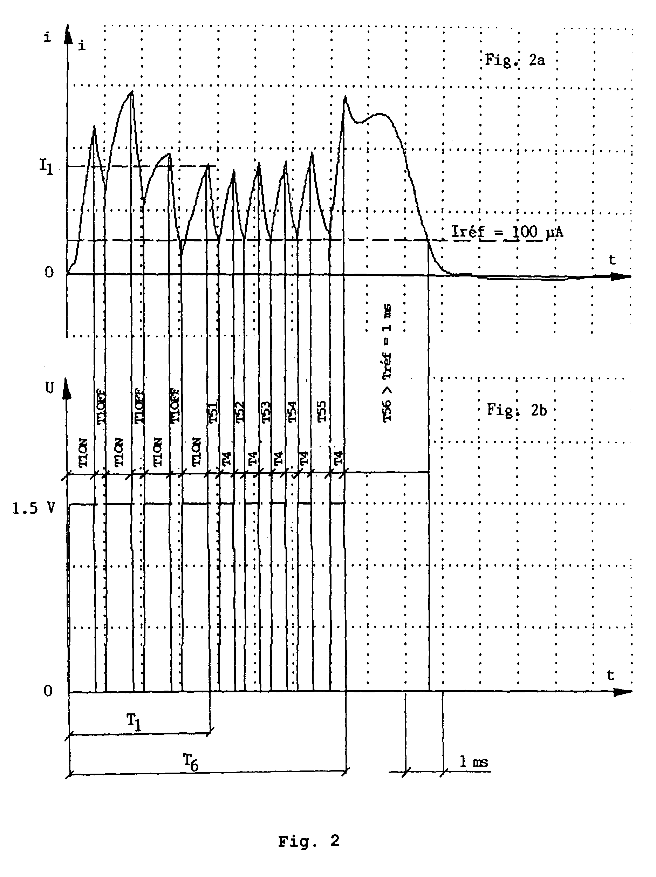

Les figures 2a et 2b représentent l'agrandissement des figures 1a et 1b.

La suite d'impulsions de tension hachées de durée $T_6$ est formée d'une première suite d'impulsions hachées de durée constante $T_1$, définies par des périodes $T_{1on}$ pendant lesquelles la bobine du moteur est alimentée par une tension de 1,5 Volt et par des périodes $T_{1off}$ pendant lesquelles la bobine du moteur est court-circuitée, suivie d'une autre suite d'impulsions partielles de durée constante $T_4$, séparées entre elles par des intervalles variables $T_{5i}$ (avec i = 1 à 6).

Dans cet exemple:

| | |
|---|---|
| $T_1$ | = 3,7 ms |
| $T_{1on}$ | = 0,7 ms |
| $T_{1off}$ | = 0,3 ms |
| $T_4$ | = 0,4 ms |

La succession des impulsions partielles $T_4$ se fait de la façon suivante: à la fin de la suite d'impulsions hachées de durée $T_1$, le courant du moteur étant égal à $I_1$, la bobine du moteur est mise en court-circuit. Le courant décroît de la valeur $I_1$ jusqu'à une valeur de référence égale, par exemple, à 100 µA. A partir de cet instant, c'est-à-dire l'instant t = $T_1$ + $T_{51}$, la bobine est à nouveau alimentée par une tension de 1,5 Volt pendant la durée $T_4$.

Après cette durée, c'est-à-dire à l'instant t = $T_1$ + $T_{51}$ + $T_4$, la bobine du moteur est mise en court-circuit jusqu'au moment où le courant du moteur est inférieur ou égal à $I_{ref}$ et ainsi de suite.

Le processus d'alimentation s'interrompt lorsque l'une des conditions suivantes apparaît:

- Le nombre d'impulsions partielles de durée $T_4$ atteint une limite; dans cet exemple, le nombre limite fixé à 15 n'est pas atteint.

- La durée totale $T_6$ de l'impulsion dépasse une valeur limite. Dans cet exemple, cette limite fixée à 15 ms n'est pas atteinte.

- L'un des intervalles de temps $T_{5i}$ dépasse une valeur limite. Dans cet exemple, cette limite $T_{réf}$ fixée à l ms est atteinte au temps t = 7,5 ms.

Dans ce cas, cette limite est atteinte durant la dernière impulsion de courant, dont la forme différente des précédentes provient du passage à 180° du rotor du moteur pas à pas.

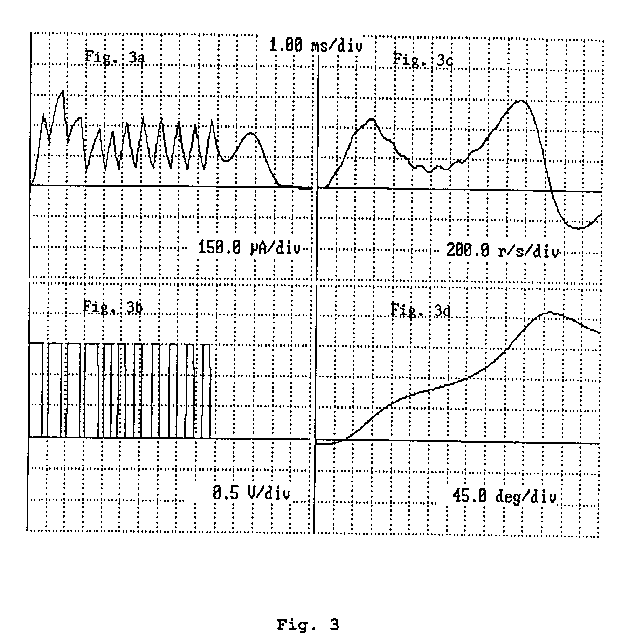

Les figures 3a, 3b, 3c et 3d représentent le courant, la tension, la vitesse angulaire et l'angle de rotation lorsque le moteur est chargé par un couple mécanique, les conditions d'alimentation étant identiques à celles de l'exemple précédent, c'est-à-dire:

| | |
|---|---|
| $T_1$ | = 3,7 ms |

(suite)

| | |
|---|---|
| $T_{1on}$ | = 0,7 ms |
| $T_{1off}$ | = 0,3 ms |
| $T_4$ | = 0,4 ms |
| $I_{réf}$ | = 100 µA |

On constate que la vitesse du rotor diminue sensiblement par rapport au cas précédent et la durée totale de l'impulsion $T_6$ passe de 7,5 ms du cas précédent à environ 10 ms.

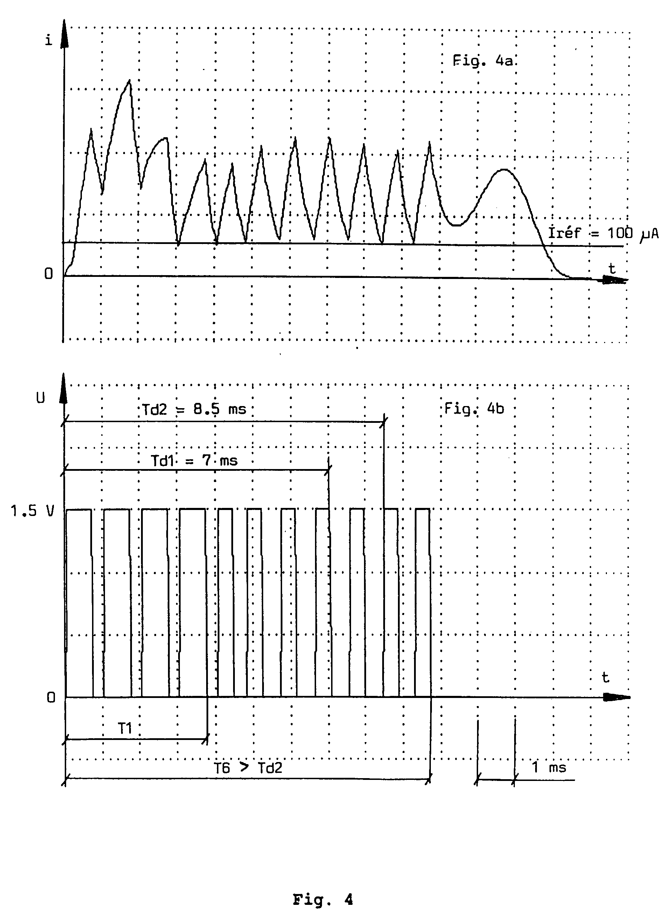

Les figures 4a et 4b représentent des agrandissements des figures 3a et 3b.

Un moyen simple à mettre en oeuvre pour détecter le niveau de charge du moteur consiste à comparer la durée totale de l'impulsion $T_6$ par rapport à une durée de détection $T_{d2}$ prédéterminée. La durée $T_{d2}$ est une fonction de la constante de temps mécanique du moteur, c'est-à-dire de son inertie et de son couple nominal.

Si la durée totale $T_6$ est supérieure à $T_{d2}$, c'est-à-dire que le moteur est en prise avec une charge importante, il faut augmenter le niveau d'énergie de l'impulsion d'alimentation.

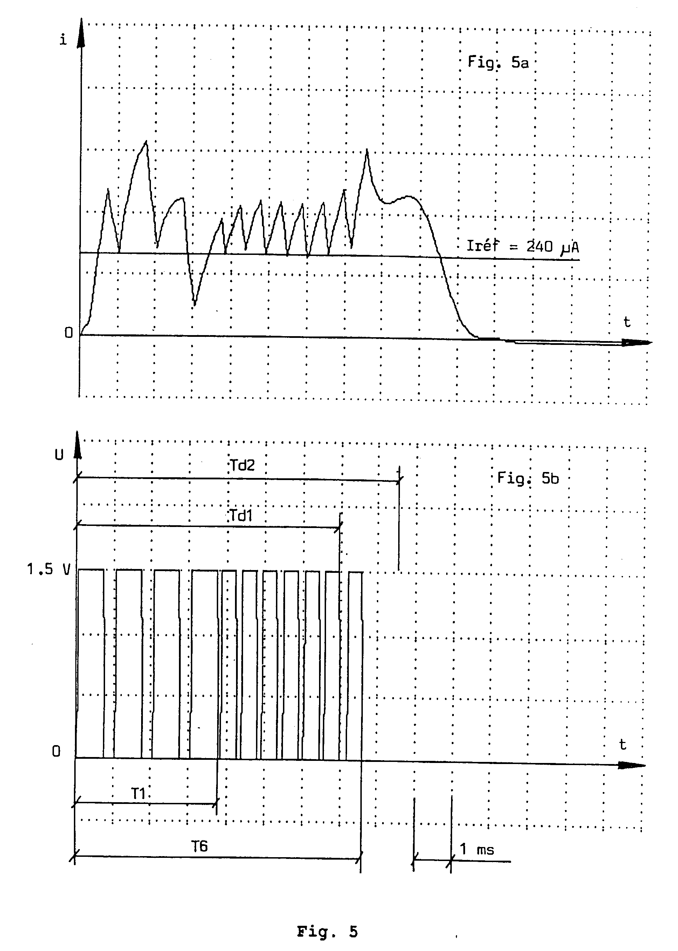

Les figures 5a et 5b représentent le courant et la tension fournis par une première méthode pour augmenter le niveau d'énergie de l'impulsion d'alimentation, consistant à augmenter le niveau du courant de référence tout en gardant les autres paramètres constants, à savoir:

| | |
|---|---|
| $T_1$ | = 3,7 ms |
| $T_{1on}$ | = 0,7 ms |
| $T_{1off}$ | = 0,3 ms |
| $T_4$ | = 0,4 ms |
| $I_{réf}$ | = 240 µA |

Dans ce cas, on constate que la durée d'alimentation, lorsque le moteur est chargé, est pratiquement égale à celle de l'exemple de la figure 1 lorsque le moteur tourne à vide.

Une deuxième méthode d'augmentation du niveau d'énergie de l'impulsion d'alimentation consiste à augmenter le rapport cyclique de l'impulsion $T_1$, le rapport cyclique étant défini par

$$\frac{T_{1on}}{T_{1on} + T_{1off}}$$

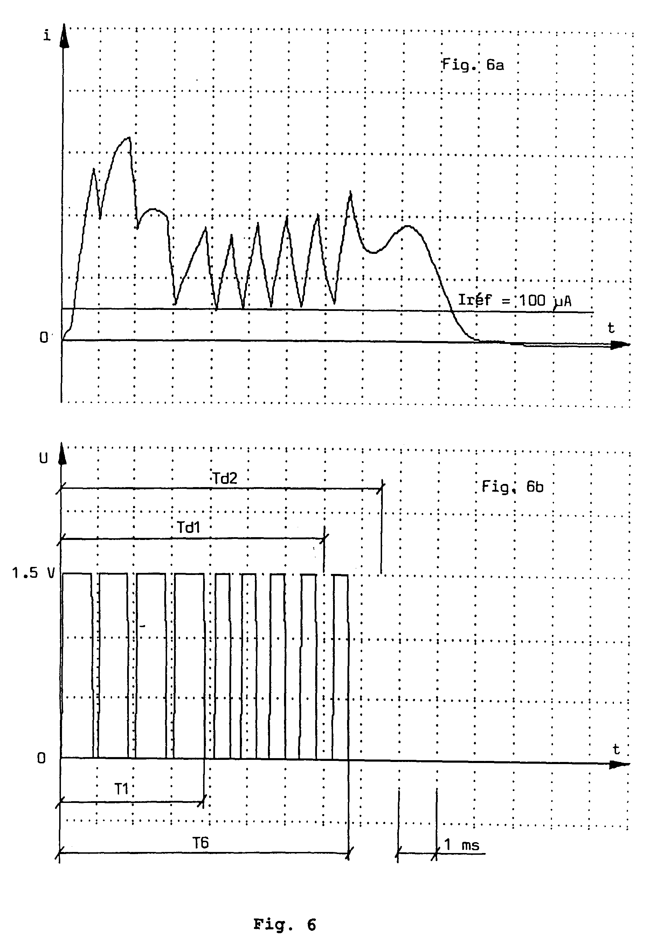

Les figures 6a et 6b illustrent le courant et la tension du moteur en charge avec les conditions d'alimentations suivantes:

| | |
|---|---|
| $T_1$ | = 3,7 ms |
| $T_{1on}$ | = 0,8 ms |
| $T_{1off}$ | = 0,2 ms |

(suite)

| $T_4$ | = 0,4 ms |
|---|---|
| $I_{réf}$ | = 100 µA |

Dans ce cas, on constate que la durée d'alimentation en charge est pratiquement égale à 7,5 ms, comme dans le cas précédent.

Une troisième méthode d'augmentation du niveau d'énergie de l'impulsion d'alimentation consiste à modifier simultanément le rapport cyclique de l'impulsion $T_1$ et le courant de référence $I_{réf}$.

Les figures 7a et 7b représentent le courant et la tension fournis par la troisième méthode d'augmentation d'énergie de l'impulsion d'alimentation. Soit $I_1$ le courant du moteur à la fin de l'impulsion $T_1$, le courant de référence est fixé égal à $k * I_1$, k étant une constante prédéterminée. Des essais systématiques sur plusieurs types de moteurs ont montré que la valeur optimale de k est comprise entre 0,6 et 0,9. Dans l'exemple représenté par les figures 7a et 7b, les paramètres fixés sont les suivants:

| $T_1$ | = 3,7 ms |
|---|---|
| $T_{1on}$ | = 0,75 ms |
| $T_{1off}$ | = 0,25 ms |
| $T_4$ | = 0,4 ms |
| $I_{réf}$ | = 0,6 |

Les figures 8a et 8b représentent le courant et la tension du moteur alimenté dans les mêmes conditions que celles de l'exemple fourni par les figures 7a et 7b, mais le moteur tournant à vide. Dans ce cas, on observe que la durée totale de l'impulsion est réduite à environ 6 ms. La réduction de la durée d'impulsion du moteur entraîne une augmentation de la consommation d'énergie due à l'excès d'énergie cinétique du rotor. Pour ramener cette consommation à un niveau optimal, l'une des solutions consiste à comparer la durée totale $T_6$ avec une durée de détection $T_{d1}$ légèrement inférieure à la durée $T_{d2}$.

Si la durée $T_6$ est inférieure à $T_{d1}$, c'est-à-dire que l'énergie cinétique résiduelle est trop importante, il faut réduire le niveau d'énergie de l'impulsion d'alimentation, soit par une réduction du niveau du courant de référence, soit par une réduction du rapport cyclique de l'impulsion $T_1$ ou encore par une combinaison de ces deux paramètres.

La figure 9 représente le schéma-bloc d'un exemple de réalisation d'un dispositif pour la mise en oeuvre du procédé d'alimentation selon l'invention. Le signal de la base de temps, provenant de l'oscillateur Q, est envoyé au circuit de division et de mise en forme 90, à la sortie duquel on obtient la période d'alimentation $T_0$ du moteur, ( correspondant à la durée entre deux débuts de suites d'impulsions, généralement 1 sec, 30 sec ou 1 min selon le type de pièce d'horlogerie), la durée $T_4$ des

impulsions partielles, la durée $T_1$ de la première impulsion hachée, la durée de référence $T_{réf}$ ainsi que les durées de détection $T_{d1}$ et $T_{d2}$. Le circuit logique 91 recevant à son entrée les différentes durées délivrées par le circuit 90, le rapport cyclique DC fournit par le circuit de réglage 93 et le signal C provenant du comparateur 94, délivre les signaux de commande D1, D2, D3 et D4 à l'étage de sortie (Driver) 92. Une résistance de mesure r est branchée en série avec le moteur M à la sortie du driver 92 et le bloc de mesure 95 transforme la tension aux bornes de la résistance de mesure r en un signal i représentant l'image du courant circulant dans le moteur M et la résistance r avant de l'envoyer au comparateur 94. Le circuit de réglage 93 compare les durées $T_{d1}$ et $T_{d2}$ avec la durée totale de l'impulsion $T_6$ et délivre à sa sortie le rapport cyclique DC et la valeur du courant de référence $I_{réf}$ adaptés à la charge du moteur.

La figure 10 représente le détail du driver 92 du schéma-bloc de la figure 9, couplé au moteur W et à la résistance r. Les transistors de sortie 101, 102, 103 et 104 sont montés en pont en H et commandés par les signaux D1, D2, D3, D4 provenant du circuit 91

## Revendications

1. Procédé d'alimentation d'un moteur pas à pas monophasé (M) pour pièce d'horlogerie, adapté pour fournir au moteur une suite d'impulsions de tension hachées de durée totale $T_6$, variable en fonction des conditions de charge et en fonction de la tension d'alimentation, ladite suite d'impulsions de durée totale $T_6$ étant formée d'une première suite, de durée totale $T_1$, d'impulsions hachées pendant laquelle le rapport cyclique desdites impulsions est constant et d'une deuxième suite d'impulsions partielles de tension, chacune étant de durée $T_4$ constante et de même polarité que celle des impulsions de la première suite de durée totale $T_1$, séparées entre elles par des intervalles de temps $T_{5i}$ pendant lesquels la bobine du moteur est mise en court-circuit, le premier intervalle de temps $T_{5i}$ étant délimité par la fin de la première suite d'impulsions de durée totale $T_1$ et par l'instant suivant cette fin où le courant de la bobine est plus petit ou égal à une valeur de référence $I_{réf}$, les autres intervalles de temps $T_{5i}$ étant délimités par la fin d'une dite impulsion de durée $T_4$ et par l'instant suivant cette fin où le courant de la bobine est plus petit ou égal à la valeur de référence $I_{réf}$, caractérisé en ce que ladite valeur de référence $I_{réf}$ et ledit rapport cyclique des impulsions de la première suite de durée totale $T_1$ sont adaptés en fonction du niveau de charge du moteur.

2. Procédé selon la revendication 1, caractérisé en ce que ladite deuxième suite d'impulsions est interrompue si un desdits intervalles de temps $T_{5i}$ de cette suite d'impulsions dépasse une valeur de référence $T_{réf}$.

3. Procédé selon la revendication 1, caractérisé en ce que ladite deuxième suite d'impulsions est interrompue si le nombre des impulsions partielles de durée $T_4$ de cette suite d'impulsions atteint une valeur maximale prédéterminée.

4. Procédé selon l'une des revendications 1 à 3, caractérisé en ce que ladite deuxième suite d'impulsions est interrompue si la durée totale $T_6$ atteint une durée maximale prédéterminée $T_{max}$.

5. Procédé selon l'une des revendications 1 à 4, caractérisé en ce que la détection dudit niveau de charge du moteur se fait par comparaison entre la durée totale $T_6$ de la suite d'impulsions avec deux durées prédéterminées $T_{d1}$ et $T_{d2}$ définies par la relation:

$$T_1 < T_{d1} < T_{d2} < T_{max}$$

6. Procédé selon la revendication 5, caractérisé en ce que le rapport cyclique de la première suite d'impulsions de durée totale $T_1$ est incrémenté lorsque la durée totale $T_6$ de la suite d'impulsions est supérieure à $T_{d2}$ et décrémenté lorsque la durée totale $T_6$ est inférieure à $T_{d1}$.

7. Procédé selon la revendication 5 ou la revendication 6, caractérisé en ce que la valeur absolue du courant de référence $I_{réf}$ est incrémentée lorsque la durée totale $T_6$ de la suite d'impulsions est supérieure à $T_{d2}$ et décrémentée lorsque la durée totale $T_6$ est inférieure à $T_{d1}$.

8. Procédé selon la revendication 5 ou selon la revendication 6, caractérisé en ce que la valeur du courant de référence $I_{réf}$ est fixée égale à $k \cdot I_1$, $I_1$ étant la valeur du courant de la dernière impulsion de ladite première suite d'impulsions de durée totale $T_1$ et $k$ étant une constante prédéterminée.

9. Procédé selon l'une des revendications 1 à 8, caractérisé en ce que deux suites d'impulsions hachées successives de durée totale $T_6$ sont de même polarité ou de polarité opposée.

10. Dispositif d'entraînement d'un moteur pas à pas monophasé (M) pour la mise en oeuvre du procédé selon l'une des revendications précédentes, comprenant un ensemble d'interrupteurs (101,102,103,104), des moyens de comptage de temps (90) déterminant des périodes principales $T_0$ se succédant avec une fréquence constante, des moyens de commande (91) agissant sur les interrupteurs (101,102,103,104) pour fournir au moteur (M) au cours de chaque période principale une suite d'impulsions hachées formée d'une pluralité d'impulsions partielles et des moyens de comparaison (93) réagissant aux durées $T_6$, $T_{d1}$ et $T_{d2}$, caractérisé en ce que les moyens de comptage (90) sont agencés pour définir les durées partielles $T_4$ et la durée $T_1$, et comportent un détecteur (94,) réagissant au niveau du courant du moteur (M) par rapport à la valeur de référence $I_{réf}$ pour délimiter les intervalles de temps variables $T_{5i}$, et en ce que les moyens de comparaison (93) sont agencés pour déterminer le rapport cyclique de la suite d'impulsions de durée totale $T_1$ et la valeur du courant de référence $I_{réf}$.

11. Pièce d'horlogerie munie d'un dispositif selon la revendication 10.

**Patentansprüche**

1. Verfahren zur Speisung eines einphasigen Schrittmotors für ein Uhrwerk, welches angepasst ist, um dem Motor eine Folge von zerhackten Spannungspulsen einer totalen Dauer $T_6$ zu liefern, die variabel in Funktion der Lastverhältnisse und in Funktion der Speisespannung sind, wobei die besagte Pulsfolge mit einer totalen Dauer $T_6$ durch eine erste Folge, mit totaler Dauer $T_1$, von zerhackten Pulsen gebildet ist, während der das Tastverhältnis der besagten Pulse konstant ist, und eine zweite Folge von Teil-Spannungspulsen, von denen jeder die konstante Dauer $T_4$ und dieselbe Polarität wie jene der Pulse der ersten Folge mit der totalen Dauer $T_1$ hat und die voneinander durch Zeitintervalle $T_{5i}$ getrennt sind, während denen die Spule des Motors kurzgeschlossen wird, wobei der erste Intervall mit der Zeit $T_{5i}$ durch das Ende der ersten Pulsfolge mit der totalen Dauer $T_1$ und durch den diesem Ende folgenden Moment, in dem der Spulenstrom kleiner oder gleich einem Referenzwert $I_{ref}$ ist, bestimmt wird, wobei die anderen Intervalle mit der Zeit $T_{5i}$ durch das Ende eines besagten Pulses mit der Dauer $T_4$ und durch den diesem Ende folgenden Moment, in dem der Spulenstrom kleiner oder gleich dem Referenzwert $I_{ref}$ ist, bestimmt werden, dadurch gekennzeichnet, dass der besagte Referenzwert $I_{ref}$ und das besagte Tastverhältnis der Pulse der ersten Folge mit der totalen Dauer $T_1$ in Funktion der Höhe der Belastung des Motors angepasst werden.

2. Verfahren nach Anspruch 1, dadurch gekennzeichnet, dass die besagte zweite Pulsfolge unterbrochen wird, wenn einer der besagten Zeitintervalle $T_{5i}$ dieser Pulsfolge einen Referenzwert $T_{ref}$ übersteigt.

3. Verfahren nach Anspruch 1, dadurch gekennzeichnet, dass die besagte zweite Pulsfolge unterbrochen wird, wenn die Zahl der Teilpulse mit der Dauer $T_4$ dieser Pulsfolge einen maximalen vorbestimmten Wert erreicht.

4. Verfahren nach einem der Ansprüche 1 bis 3, dadurch gekennzeichnet, dass die besagte zweite Pulsfolge unterbrochen wird, wenn die totale Dauer $T_6$ eine maximale vorbestimmte Dauer $T_{max}$ erreicht.

5. Verfahren nach einem der Ansprüche 1 bis 4, dadurch gekennzeichnet, dass die Erfassung der besagten Höhe der Belastung des Motors durch vergleichen der totalen Dauer $T_6$ der Pulsfolge mit zwei vorbestimmten Dauern $T_{d1}$ und $T_{d2}$ erfolgt, die durch die Beziehung

$$T_1 < T_{d1} < T_{d2} < T_{max}$$

definiert sind.

6. Verfahren nach Anspruch 5, dadurch gekennzeichnet, dass das Tastverhältnis der ersten Pulsfolge mit der totalen Dauer $T_1$ erhöht wird, wenn die totale Dauer $T_6$ der Pulsfolge oberhalb von $T_{d2}$ ist und erniedrigt wird, wenn die totale Dauer $T_6$ unterhalb von $T_{d1}$ ist.

7. Verfahren nach Anspruch 5 oder 6, dadurch gekennzeichnet, dass der Absolutwert des Referenzstromes $I_{ref}$ erhöht wird, wenn die totale Dauer $T_6$ der Pulsfolge oberhalb $T_{d2}$ ist und erniedrigt wird, wenn die totale Dauer $T_6$ unterhalb von $T_{d1}$ ist.

8. Verfahren nach Anspruch 5 oder 6, dadurch gekennzeichnet, dass der Wert des Referenzstromes $I_{ref}$ durch $k \cdot I_1$ bestimmt ist, wobei $I_1$ der Wert des Stromes des letzten Pulses der besagten ersten Pulsfolge mit der totalen Dauer $T_1$ und k eine vorbestimmte Konstante ist.

9. Verfahren nach einem der Ansprüche 1 bis 8, dadurch gekennzeichnet, dass zwei aufeinanderfolgende Folgen von zerhackten Pulsen mit einer totalen Dauer $T_6$ gleiche oder entgegengesetzte Polarität haben.

10. Vorrichtung zum Antreiben eines einphasigen Schrittmotors (M) zum Durchführen des Verfahrens nach einem der vorangehenden Ansprüche, enthaltend einen Satz von Schaltern (101, 102, 103, 104), Zeitzählmittel (90), die sich mit einer konstanten Frequenz folgende Hauptperioden $T_0$ bestimmen, auf die Schalter (101, 102, 103, 104) einwirkende Steuermittel (91), um dem Motor (M) während jeder Hauptperiode eine Folge von zerhackten, aus einer Mehrzahl von Teilpulsen geformten Pulsen zu liefern und auf die Dauern $T_6$, $T_{d1}$ und $T_{d2}$ reagierende Vergleichsmittel (93), dadurch gekennzeichnet, dass die Zählmittel (90) zum Definieren der Teildauern $T_4$ und der Dauer $T_1$ eingerichtet sind und einen auf die Höhe des Motorstromes gegenüber dem Referenzwert $I_{ref}$ reagierenden Detektor (94) enthalten, um die variablen Zeitintervalle $T_{5i}$ zu bestimmen, und dass die Vergleichsmittel (93) eingerichtet sind, um das Tastverhältnis der Pulsfolge mit der totalen Dauer $T_1$ und den Wert des Referenzstromes $I_{ref}$ zu bestimmen.

11. Mit einer Vorrichtung nach Anspruch 10 ausgerüstetes Uhrwerk.

## Claims

1. A method of feeding a single-phase stepping motor (M) for a timepiece, adapted to supply the motor with a sequence of chopped voltage pulses of total duration $T_6$, variable as a function of load conditions and as a function of the feed voltage, said sequence of pulses of total duration $T_6$ being made up of a first sequence, of total duration $T_1$, of chopped pulses during which the cyclical ratio of said pulses is constant and of a second sequence of partial voltage pulses, each being of constant duration $T_4$ and of the same polarity as the pulses of the first sequence of total duration $T_1$, separated from each other by time intervals $T_{5i}$ during which the coil of the motor is shortcircuited, the first time interval $T_{5i}$ being delimited by the end of the first sequence of pulses of total duration $T_1$ and by the instant following that end when the current of the coil is smaller or equal to a reference value $I_{ref}$, the other time intervals $T_{5i}$ being delimited by the end of a said pulse of duration $T_4$ and by the instant following that end when the current of the coil is smaller or equal to the reference value $I_{ref}$, wherein the said reference value $I_{ref}$ and said cyclical ratio of pulses of the first sequence of total duration $T_1$ are adapted as a function of the level of load of the motor.

2. The method of claim 1, wherein said second sequence of pulses is interrupted if one of said time intervals $T_{5i}$ of this sequence of pulses surpasses a reference value $T_{ref}$.

3. The method of claim 1, wherein said second sequence of pulses is interrupted if the number of partial pulses of duration $T_4$ of this sequence of pulses attains a predetermined maximal value.

4. The method of one of the claims 1 to 3, wherein said second sequence of pulses is interrupted if the total

duration $T_6$ attains a predetermined maximal duration $T_{max}$.

5. The method of one of the claims 1 to 4, wherein the detection of said level of load of the motor is made by comparison of the total duration $T_6$ of the sequence of pulses with two predetermined durations $T_{d1}$ and $T_{d2}$ defined by the relationship:

$$T_1 < T_{d1} < T_{d2} < T_{max.}$$

6. The method of claim 5, wherein the cyclical ratio of the first sequence of pulses of total duration $T_1$ is increased by increments when the total duration $T_6$ of the sequence of pulses is greater than $T_{d2}$ and is decreased by increments when the total duration $T_6$ is less than $T_{d1}$.

7. The method of claim 5 or claim 6, wherein the absolute value of the reference current $I_{ref}$ is increased by increments when the total value $T_6$ of the sequence of pulses is greater than $T_{d2}$ and is decreased by increments when the total duration $T_6$ is less than $T_{d1}$.

8. The method of claim 5 or claim 6, wherein the value of the reference current $I_{ref}$ is fixed equal to $k \cdot I_1$, $I_1$ being the value of the current of the last pulse of said first sequence of pulses of total duration $T_1$ and k being a predetermined constant.

9. The method of one of the claims 1 to 8, wherein two successive sequences of chopped pulses of total duration $T_6$ are of the same polarity or of opposite polarity.

10. A feed device for a single-phase stepping motor (M) for implementing the method according to one of the preceding claims, comprising a set of circuit breakers (101, 102, 103, 104), time counting means (90) determining principal periods To following one another with a constant frequency, control means (91) acting upon the circuit breakers (101, 102, 103, 104) to supply the motor (M) during each main period with a sequence of chopped pulses made up of a plurality of partial pulses and means of comparison (93) responding to durations $T_6$, $T_{d1}$ and $T_{d2}$, wherein the counting means (90) are designed to define the partial durations $T_4$ and the duration $T_1$, and include a detector (94) reacting to the level of current of the motor (M) with respect to the reference value $I_{ref}$ to delimit the variable time limits $T_{5i}$, and wherein the means of comparison (93) are designed to determine the cyclical ratio of the sequence of pulses of total duration $T_1$ and the value of the reference current $I_{ref}$.

11. A timepiece equipped with a device according to claim 10.

Fig. 1a
Fig. 1c
1.00 ms/div
150.0 µA/div
200.0 r/s/div
Fig. 1b
Fig. 1d
0.5 V/div
45.0 deg/div

Fig. 1

Fig. 2a

Fig. 2b

Fig. 2

Fig. 3

Fig. 4

Fig. 5a

Iréf = 240 μA

Fig. 5b

Td2

Td1

1.5 V

T1

T6

1 ms

Fig. 5

Fig. 6a

Iréf = 100 µA

Fig. 6b

Td2

Td1

1.5 V

T1

T6

1 ms

Fig. 6

Fig. 7a

Fig. 7b

Fig. 7

Fig. 8a

Iréf = 0.6 I1

Fig. 8b

Td2

Td1

1.5 V

T1

T6 < Td1

1 ms

Fig. 8

Fig. 9

Fig. 10